# EUROPÄISCHE PATENTSCHRIFT

(11) **EP 2 592 723 B1**
(45) Veröffentlichungstag und Bekanntmachung des Hinweises auf die Patenterteilung: **09.07.2014**
(21) Anmeldenummer: 11464020.4
(22) Anmeldetag: 14.11.2011
(51) Int. Cl.: H02K 5/08, H02K 7/00, H02K 15/14

(54) **Verfahren zur Herstellung eines Aktuators**
Method for producing an actuator
Procédé de fabrication d'un actionneur

(43) Veröffentlichungstag der Anmeldung: 15.05.2013
(73) Patentinhaber: Continental Automotive GmbH, 30165 Hannover (DE)
(72) Erfinder: Opre, Calin, 300576 Timisoara (RO)

(56) Entgegenhaltungen:
- EP-A1- 0 921 050
- DE-A1-102006 049 292

## Beschreibung

Die Erfindung betrifft ein Verfahren zur Herstellung eines Aktuators, wobei der Aktuator zumindest einen Stator, einen Rotor, ein Lager, eine Achse, ein Rohr, einen Leadframe und ein Gehäuse aufweist.

In der Automobiltechnik werden seit einigen Jahren vermehrt Aktuatoren eingesetzt, die in der Regel elektrisch angetrieben werden und z. B. zur Verstellung von Drosselklappen oder zur Betätigung automatisierter Getriebe eingesetzt werden. Der Zusammenbau solcher Aktuatoren gestaltet sich in der Regel relativ aufwändig, da die Aktuatoren aus einer Vielzahl von Einzelteilen bestehen, die zueinander positioniert und ausgerichtet werden müssen, um einen qualitativ hochwertigen Zusammenbau des Aktuators zu ermöglichen. Hierzu werden in der Regel Einzelteile wie ein Stator, ein Lager, ein Rohr und ein Leadframe in einem Gehäuse aus Metall angeordnet, was eine aufwändige menschliche Handarbeit erfordert, wobei das Gehäuse aus Metall zudem teuer und relativ schwer ist.

Die EP 0 921 050 A1 offenbart ein elektrisches Lenksystem mit einem Elektromotor. Das Lenkhilfesystem weist einen Aktuator mit einem Stator und einem Rotor auf sowie einem Lager und einer Achse. Der Stator ist mit einem Lead-Frame verbunden, wobei zwischen dem Stator und dem Lead-Frame elektrisch leitende Verbindungen hergestellt sind Zudem ergibt eine erstarrte Spritzgussmasse den Lead-Frame und den Stator. Womit sie in ihrer Position zueinander fixiert sind.

Die DE 10 2006 049 292 A1 offenbart eine Kreiselpumpe, bei der ein Stator, ein Lager und ein Spaltrohr zusammen in einem Motorgehäuse angeordnet und vergossen sind.

Nachteilig bei dem bekannten Herstellungsverfahren eines Aktuators ist, dass eine Vielzahl von Einzelteilen aufwendig zusammengebaut und in ihrer Lage zueinander positioniert werden müssen. Dies erfordert zumeist einen hohen Grad an Handarbeit bei der Herstellung des Aktuators.

Der Erfindung liegt das Problem zugrunde, das bekannte Verfahren zur Herstellung eines Aktuators derart weiter zu bilden, dass es zur Herstellung des Aktuators weniger Verfahrensschritte bedarf, wobei eine möglichst hohe Automatisierung der einzelnen Verfahrensschritte ermöglicht werden soll.

Dieses Problem wird erfindungsgemäß durch die Merkmale des unabhängigen Anspruchs gelöst. Durch die folgenden Verfahrensschritte:
- Verbinden des Stators mit dem Leadframe, wobei zwischen dem Stator und dem Leadframe elektrisch leitende Verbindungen hergestellt werden,
- Positionieren des mit dem Leadframe verbundenen Stators, des Rohrs und des Lagers in einer Spritzgussform,
- Einspritzen einer Spritzgussmasse in die Spritzgussform, wobei die erstarrte Spritzgussmasse den Leadframe, den Stator, das Rohr und das Lager in ihrer Position zu einander fixiert und das Gehäuse des Aktuators bildet,
- Verbinden des Rotors mit der Achse,
- Einfügen des mit der Achse verbundenen Rotors in den Stator, wobei die Achse drehbar im Lager gelagert wird,
wird eine sehr einfache Herstellung des Aktuators erreicht, die sich durch einen hohen Grad einer möglichen Automatisierung auszeichnet. Da nach dem erfindungsgemäßen Verfahren kaum noch Handarbeit zur Herstellung des Aktuators notwendig ist, kann der Aktuator sehr kostengünstig hergestellt werden. Da die Spritzgussmasse nach ihrem Erkalten ein Gehäuse für den Aktuator bildet, kann das teure und schwere Metallgehäuse einfallen, wodurch der nach dem erfindungsgemäßen Verfahren hergestellte Aktuator kostengünstig und leicht wird.

Bei einer vorteilhaften Weiterbildung der Erfindung wird in einem weiteren Verfahrensschritt eine Leiterplatte in das Gehäuse des Aktuators eingesetzt, die mit dem Leadframe elektrisch verbunden wird. Diese Leiterplatte kann zum Einen die Stromversorgung des Stators ermöglichen und zum Anderen elektrische und/oder elektronische Bauelemente aufnehmen, wie zum Beispiel Widerstände, Spulen, Kondensatoren und/oder integrierte Schaltkreise. Die elektrischen und/oder elektronischen Bauelemente können auf der Leiterplatte elektrisch derart verbunden sein, dass sie Steuersignale erzeugen können, die zur Ansteuerung der Aktuators dienen. Dazu ist es vorteilhaft, wenn die Leiterplatte vor dem Einsetzen in das Gehäuse des Aktuators mit elektrischen und/oder elektronischen Bauteilen bestückt wird.

Die Erfindung lässt zahlreiche Ausführungsformen zu. Zur weiteren Verdeutlichung ihres Grundprinzips ist eine davon in den Zeichnungen dargestellt und wird nachfolgend beschrieben. Diese zeigen in:
- Fig. 1: einen Aktuator, in dem ein Stator angeordnet ist,
- Fig. 2: den Stator, der mit Draht bewickelt ist,
- Fig. 3: den Stator nach einer Umspritzung mit einer Spritzgussmasse,
- Fig. 4: ein Leadframe,
- Fig. 5: eine Verbindung des Leadframes mit dem Stator,
- Fig. 6: detailliert die elektrische Verbindung zwischen dem Stator und dem Leadframe,
- Fig. 7: den in einer Spritzgussform angeordneten Stator,
- Fig. 8: das durch Spritzgießen entstandene Bauteil,
- Fig. 9: einen Rotor,
- Fig. 10: eine Achse,
- Fig. 11: ein Bauteil aus dem Rotor und der Achse,
- Fig. 12: die Vervollständigung des Aktuators,
- Fig. 13: eine elektrische Leiterplatte im Gehäuse des Aktuators,
- Fig. 14: den Aktuator mit einer Abdeckung,
- Fig. 15: einen Ausschnitt des Gehäuses.

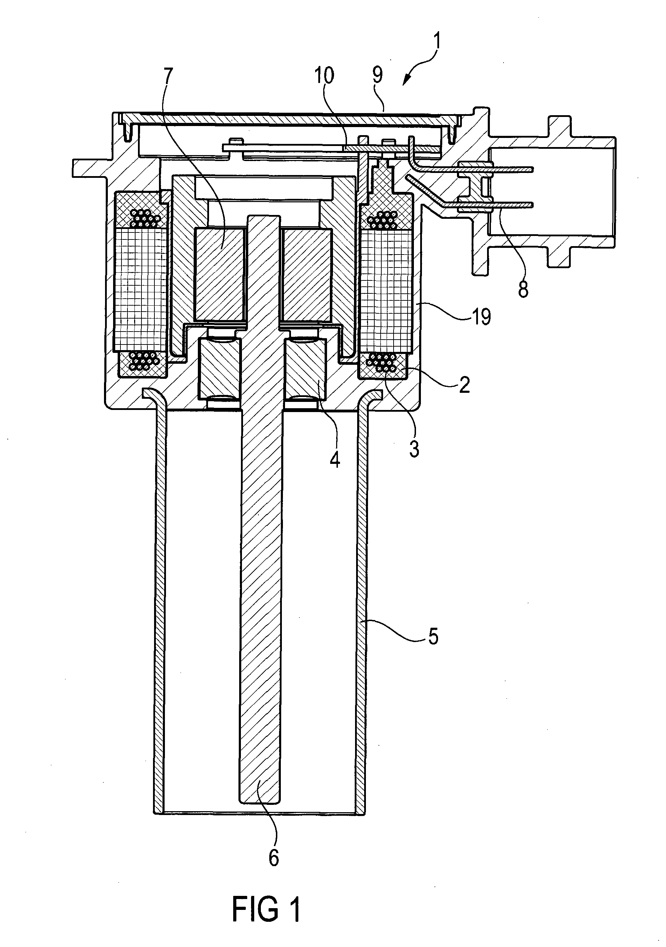

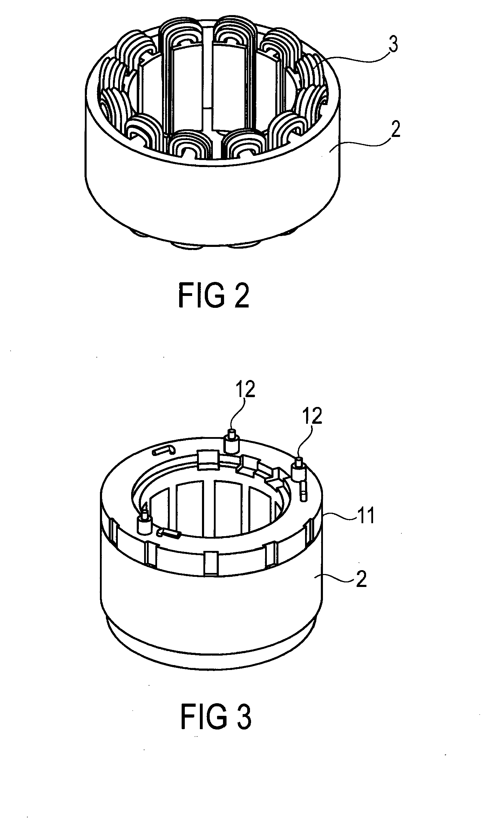

Fig. 1 zeigt einen Aktuator 1, in dem ein Stator 2 angeordnet ist, der mit Draht 3 bewickelt ist. Dieser Stator 2 ist fest in einem Gehäuse 19 angeordnet. Das Gehäuse 19 besteht aus einer Spritzgussmasse 11, die in der Regel aus einem Kunststoff gebildet wird. Im Gehäuse 19 ist weiterhin ein Lager 4 zu erkennen, in dem eine Achse 6 drehbar gelagert ist. Die Achse 6 ist mit dem Rotor 7 verbunden, der somit drehbar in dem Aktuator 1 gelagert ist. Der Rotor 7 und der Stator 2 bilden zusammen einen Elektromotor. Die Achse 6 erstreckt sich in ein Rohr 5, das unter anderem zu Schutz und zur Positionierung der Achse 6 dient und das mit dem Gehäuse 19 mechanisch verbunden ist. Weiterhin ist im Gehäuse 19 ein Leadframe 8 zu erkennen. Ein Leadframe 8 ist ein Stanzblechteil, das zur Weiterleitung von elektrischen Strom und elektrischen Signalen ausgebildet ist und in diesem Beispiel mit dem Stator 2 elektrisch verbunden ist. Darüber hinaus ist der Leadframe 8 elektrisch mit einer Leiterplatte 10 verbunden. Die Leiterplatte 10 ist ebenfalls im Gehäuse 19 des Aktuators 1 angeordnet. Die Leiterplatte 10 kann mit elektronischen Bauteilen wie Kondensatoren, Widerständen und/oder integrierten Schaltkreisen bestückt sein. Über der Leiterplatte 10 ist zur Abdichtung des Gehäuses 19 eine Abdeckung 9 zu erkennen. Diese Abdeckung 9 kann mit dem Gehäuse 19 z. B. durch Ultraschallschweißen verbunden sein. Die Herstellung des Aktuators nach Fig. 1 wird in den nun folgenden Figuren 2 bis 15 näher erläutert.

In Fig. 2 ist der Stator 2 zu erkennen, der mit Draht bewickelt ist, wobei der Draht 3 auf dem Stator 2 zu einer Vielzahl von elektrischen Spulen aufgewickelt ist.

Fig. 3 zeigt den Stator 2 nach einer Umspritzung mit einer Spritzgussmasse 11. Die Spritzgussmasse 11 bildet eine mechanische Stabilisierung der Drahtspulen aus Fig. 2 sowie eine elektrische Isolation dieser Spulen. Aus der Spritzgussmasse 11 ragen elektrische Statoranschlusselemente 12 heraus. Mit diesen elektrischen Statoranschlusselementen 12 können die in Fig. 2 sichtbar dargestellten Spulen mit elektrischem Strom versorgt werden.

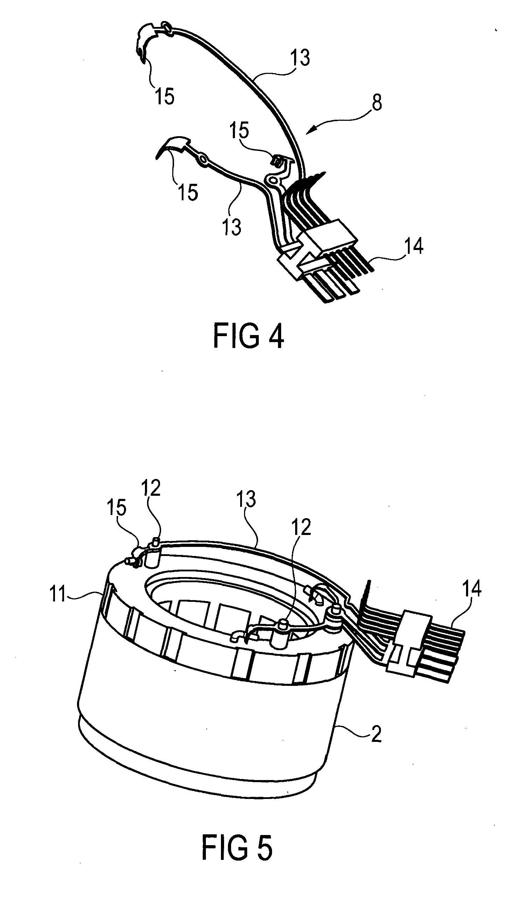

Fig. 4 zeigt ein Leadframe 8. Ein Leadframe 8 ist ein Stanzblechteil, das Leadframeleiterbahnen 13 und Steckerpin 14 aufweist. Darüber hinaus zeigt der hier dargestellte Leadframe 8 elektrische Leadframeanschlusselemente 15.

In Fig. 5 wird gezeigt, dass der Leadframe 8 mithilfe der elektrischen Leadframeanschlusselemente 15 mit dem Stator 2 verbunden ist. Hierbei können die elektrischen Leadframeanschlusselemente 15 an die elektrischen Statoranschlusselemente 12 z. B. angeschweißt, angelötet und/angecrimpt werden. Bei all diesen Verbindungstechniken entstehen zwischen den elektrischen Leadframeanschlusselementen 15 und den elektrischen Statoranschlusselementen 12 eine elektrisch leitende Verbindung, womit über die Leadframeleiterbahnen 13 den Drahtwicklungen 3 des Stators 2 ein entsprechend hoher Strom zugeführt werden kann.

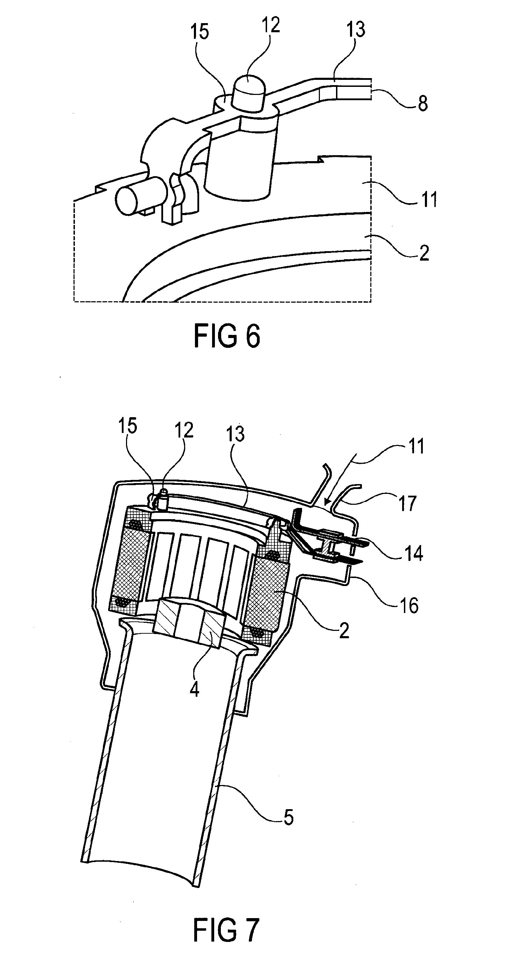

Fig. 6 zeigt noch einmal detailliert die elektrische Verbindung zwischen dem Stator 2 und dem Leadframe 8. Die Leadframeleiterbahn 13 mündet im elektrischen Leadframeanschlusselement 15, das elektrisch mit dem Statoranschlusselement 12 verbunden ist.

Fig. 7 zeigt eine Spritzgussform 16. In der Spritzgussform 16 ist der Stator 2 und der Leadframe 8 angeordnet, wobei der Stator 2 mit dem Leadframe 8 elektrisch verbunden ist. Der Stator 2 findet in der Spritzgussform 16 eine Aufnahme, in der der Stator 2 exakt positioniert ist. Darüber hinaus sind in der Spritzgussform 16 das Lager 4 sowie das Rohr 5 angeordnet. Auch diese beiden Teile finden in der Spritzgussform 16 Halterungen, in denen sie in ihrer Lage genau positioniert sind. Damit ermöglicht die Spritzgussform 16 eine sehr genaue Positionierung und Ausrichtung des Rohres 5, des Lagers 4 und des Stators 2 mit dem Leadframe 8 zueinander. Nach der Positionierung dieser Bauteile in der Spritzgussform wird durch die Injektionsöffnung 17 der Spritzgussform 16 die Spritzgussmasse 11 in die Spritzgussform 16 eingespritzt. Dies erfolgt in der Regel mit einem relativ hohen Spritzdruck, wobei die Spritzgussmasse 11 erwärmt ist. Nach dem Erkalten der Spritzgussmasse 11 sind der Stator 2 mit dem Leadframe 8 und das Lager 4 sowie das Rohr 5 in ihrer Lage fixiert und exakt zueinander positioniert. Die erkaltete Spritzgussmasse 11 bildet nun das Gehäuse 19 des Aktuators 1. Nach dem Erkalten der Spritzgussmasse 11 kann die Spritzgussform 16 entfernt werden und das so entstandene Bauteil kann der Spritzgussform 16 entnommen werden.

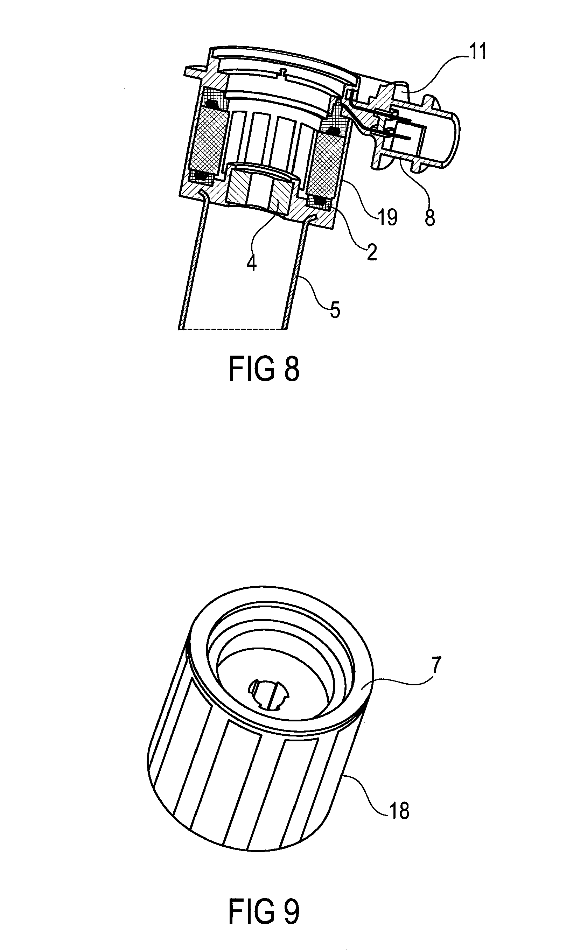

Das nun entstandene Bauteil ist in Fig. 8 dargestellt. Zu erkennen ist das Gehäuse 19 des Aktuators 1, das aus Spritzgussmasse 11 gebildet ist. In der erkalteten Spritzgussmasse 11 ist das Rohr 5 zumindest teilweise eingebettet und fixiert. Darüber hinaus ist in der Spritzgussmasse 11 das Lager 4 und der Stator 2 mit dem Leadframe 8 zu erkennen. Die erkaltete Spritzgussmasse 11 garantiert eine exakte Positionierung des Rohres 5, des Lagers 4 und des Stators 2 mit dem Leadframe 8 zueinander. Darüber hinaus bildet die erkaltete Spritzgussmasse 11 das Gehäuse 19 des Aktuators 1.

Fig. 9 zeigt den Rotor 7 mit einer Vielzahl von Permanentmagneten 18, die im Rotor mechanisch fixiert angeordnet sind.

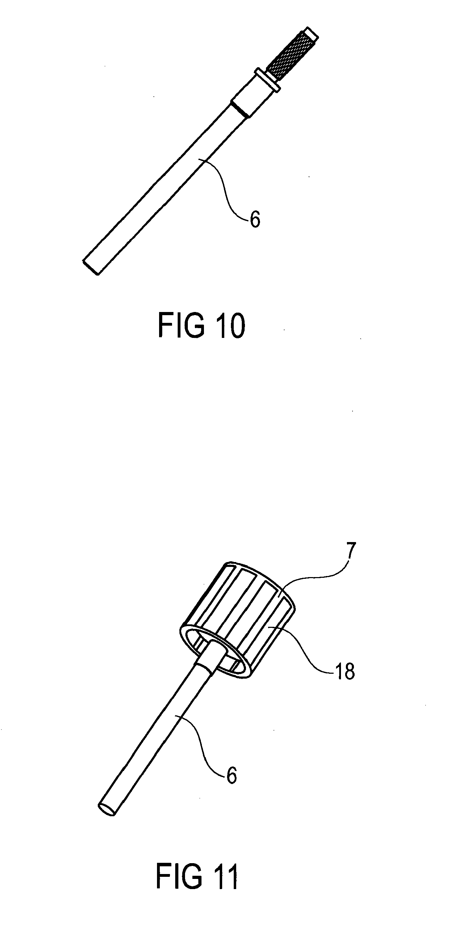

Fig. 10 zeigt eine Achse 6. Diese Achse 6 wird mit dem in Fig. 9 dargestellten Rotor 7 verbunden.

Das Bauteil aus dem Rotor 7 und der Achse 6 ist in Fig. 11 dargestellt. Zur Verbindung des Rotors 7 mit der Achse 6 können unterschiedliche Verbindungstechniken eingesetzt werden. Denkbar ist z. B. eine mechanische Pressverbindung zwischen dem Rotor 7 und der Achse 6 und/oder eine Schweiß- und/oder eine Klebeverbindung. In Fig. 11 sind wiederum die auf dem Rotor angeordneten Permanentmagneten 18 zu erkennen.

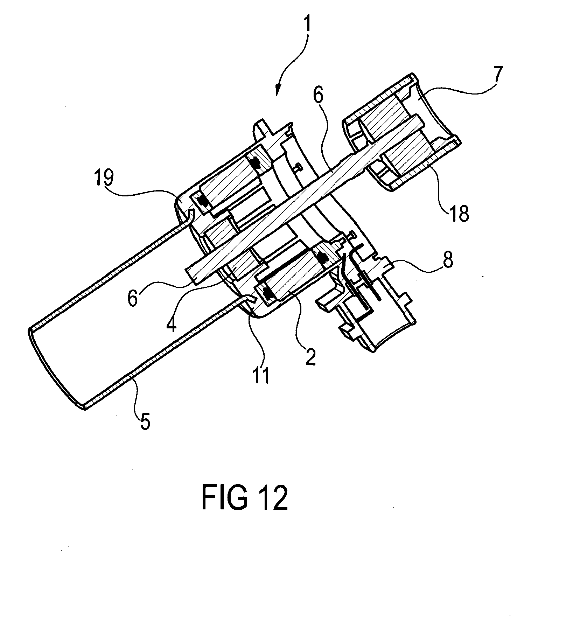

Die Fig. 12 zeigt die Vervollständigung des Aktuators, wobei in das aus Fig. 8 bekannte Bauteil, die aus Fig. 11 bekannte Kombination aus dem Rotor 7 und der Achse 6 eingefügt wird. Auf diese Weise entsteht der in Fig. 1 gezeigte Aktuator 1.

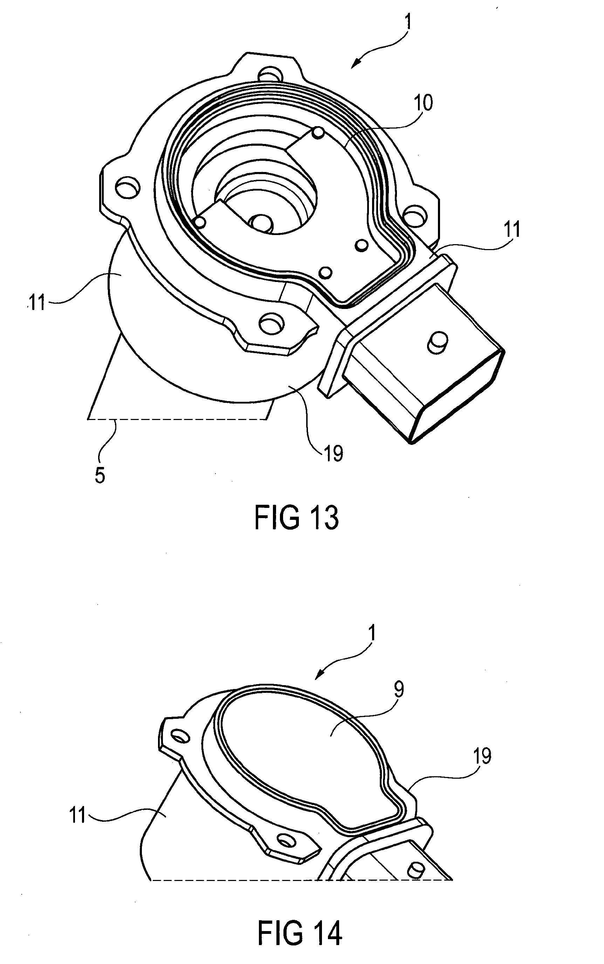

Zur Vervollständigung des Aktuators 1 kann entsprechend Fig. 13 in das Gehäuse 19 des Aktuators 1 eine elektrische Leiterplatte 10 eingesetzt werden. Die elektrische Leiterplatte 10 enthält unter anderem elektrische Leiterbahnen, die den Stator 2 des Aktuators 1 mit elektrischem Strom und elektrischen Steuersignalen versorgen können. Darüber hinaus können auf der Leiterplatte 10 elektronische Bauteil wie Kondensatoren, Widerstände, Spulen und/oder integrierte Schaltkreise angeordnet sein. Diese elektronischen Bauteile ermöglichen die Ansteuerung des Aktuators 1, so dass die Achse 6 des Aktuators 1 die von ihr geforderte mechanische Drehbewegung und/oder translatorische Bewegung ausführen kann.

Fig. 14 zeigt den Aktuator 1 mit einer Abdeckung 9, die mit dem Gehäuse 19 verbunden ist. Diese Abdeckung 9 schützt den Raum in dem Gehäuse 19, in dem sich der Rotor 7 und die Leiterplatte 10 befinden, vor äußeren Einflüssen, wie z. B. Schmutz und/oder Spritzwasser und/oder öl.

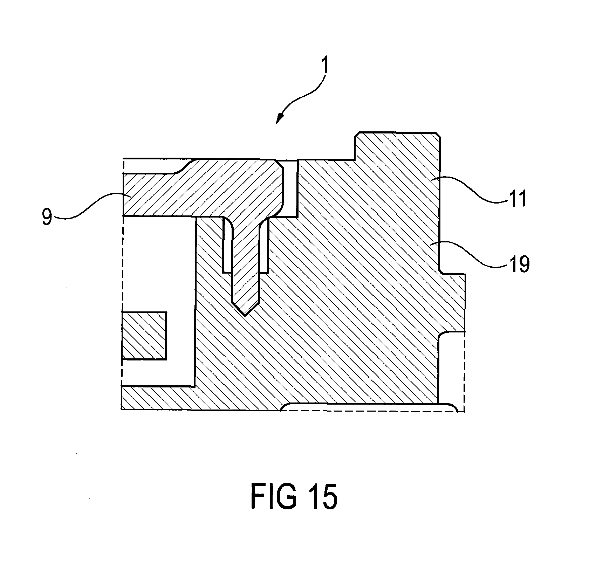

Fig. 15 zeigt einen Ausschnitt des Gehäuses 19, das aus der Spritzgussmasse 11 gebildet ist, wobei die Abdeckung 9 zu erkennen ist, die mit dem Gehäuse 19 z. B. mechanisch und/oder durch Kleben und/oder durch Laserschweißen verbunden sein kann.

## Patentansprüche

1. Verfahren zur Herstellung eines Aktuators (1), wobei der Aktuator (1) zumindest einen Stator (2), einen Rotor (7), ein Lager (4), eine Achse (6), ein Rohr (5), einen Leadframe (8) und ein Gehäuse (19) aufweist, wobei das Rohr (5)zum Schutz und zur Positionierung der Achse (6) dient und mit dem Gehäuse (19) mechanisch verbunden ist, g e - **kennzeichnet durch** die folgenden Verfahrensschritte:
- Verbinden des Stators (2) mit dem Leadframe (8), wobei zwischen dem Stator (2) und dem Leadframe (8) elektrisch leitende Verbindungen hergestellt werden,
- Positionieren des mit dem Leadframe (8) verbundenen Stators (2), des Rohrs (5) und des Lagers (4) in einer Spritzgussform (16),
- Einspritzen einer Spritzgussmasse (11) in die Spritzgussform (16), wobei die erstarrte Spritzgussmasse (11) den Leadframe (8), den Stator (2), das Rohr (5) und das Lager (4) in ihrer Position zu einander fixiert und das Gehäuse (19) des Aktuators (1) bildet,
- Verbinden des Rotors (7) mit der Achse (6),
- Einfügen des mit der Achse (6) verbundenen Rotors (7) in den Stator (2), wobei die Achse (6) drehbar im Lager (4) gelagert wird.

2. Verfahren zur Herstellung eines Aktuators (1), nach Anspruch 1, **dadurch gekennzeichnet, dass** in einem weiteren Verfahrensschritt eine Leiterplatte (10) in das Gehäuse (19) des Aktuators (1) eingesetzt wird, die mit dem Leadframe (8) elektrisch verbunden wird.

3. Verfahren zur Herstellung eines Aktuators (1), nach Anspruch 2, **dadurch gekennzeichnet, dass** die Leiterplatte (10) vor dem Einsetzen in das Gehäuse (19) des Aktuators (1) mit elektronischen Bauteilen bestückt wird.

## Claims

1. Method for producing an actuator (1), the actuator (1) comprising at least a stator (2), a rotor (7), a bearing (4), a spindle (6), a tube (5), a lead frame (8) and a housing (19), the tube (5) serving for the protection and positioning of the spindle (6) and being mechanically connected to the housing (19), **characterized by** the following process steps:
- connecting the stator (2) to the lead frame (8), electrically conductive connections being established between the stator (2) and the lead frame (8),
- positioning the stator (2) connected to the lead frame (8), the tube (5) and the bearing (4) in an injection mold (16),
- injecting an injection molding compound (11) into the injection mold (16), the cured injection molding compound (11) fixing the lead frame (8), the stator (2), the tube (5) and the bearing (4) in their positions relative to one another and forming the housing (19) of the actuator (1),
- connecting the rotor (7) to the spindle (6),
- inserting the rotor (7) connected to the spindle (6) into the stator (2), the spindle (6) being mounted rotatably in the bearing (4).

2. Method for producing an actuator (1) according to Claim 1, **characterized in that** in a further process step a circuit board (10) which is electrically connected to the lead frame (8) is placed in the housing (19) of the actuator (1).

3. Method for producing an actuator (1) according to Claim 2, **characterized in that** the circuit board (10) is fitted with electronic components prior to being inserted in the housing (19) of the actuator (1).

## Revendications

1. Procédé de fabrication d'un actionneur (1), l'actionneur (1) ayant au moins un stator (2), un rotor (7), un palier (4), un axe (6), un tube (5), une grille de connexion (8) et une carcasse (19), le tube (5) servant à protéger et à mettre l'axe (6) en position et étant relié mécaniquement à la carcasse (19), **caractérisé par** les stades de procédé suivants
- on relie le stator (2) à la grille de connexion (8), des liaisons conductrices de l'électricité étant produites entre le stator (2) et la grille de connexion (8)
- on met le stator (2) relié à la grille de connexion (8), le rotor (5) et le palier (4) en position dans un moule (16) de moulage par injection,
- on injecte une matière (11) à mouler par injection dans le moule (16) de moulage par injection, la matière (11) durcie à mouler par injection immobilisant, en leur position les uns par rapport aux autres, la grille de connexion (8), le stator (2), le tube (5) et le palier (4) et formant la carcasse (19) de l'actionneur (1),
- on relie le rotor (7) à l'axe (6),
- on met le rotor (7) relié à l'axe (6) dans le stator (2), l'axe (6) étant monté tournant dans le palier (4).

2. Procédé de fabrication d'un actionneur (1) suivant la revendication 1, **caractérisé en ce que** dans un autre stade du procédé, on met une plaquette (10) à circuit imprimé dans la carcasse (19) de l'actionneur (1), plaquette qui est reliée électriquement à la grille de connexion (8).

3. Procédé de fabrication d'un actionneur (1) suivant la revendication 2, **caractérisé en ce que** la plaquette (10) à circuit imprimé est, avant d'être mise dans la carcasse (19) de l'actionneur (1), équipée de composants électroniques.
